# EUROPEAN PATENT SPECIFICATION

(11) **EP 2 909 559 B1**
(45) Date of publication and mention of the grant of the patent: **07.03.2018**
(21) Application number: 13818366.0
(22) Date of filing: 21.10.2013
(51) Int. Cl.: F28D 20/02, F28D 21/00

(54) **METHOD TO TRANSFER HEAT ENERGY BY MEANS OF PHASE CHANGE MATERIALS**
VERFAHREN ZUR ÜBERTRAGUNG VON WÄRMEENERGIE MITTELS PHASENWECHSELMATERIALIEN
PROCÉDÉ POUR TRANSFÉRER DE L'ÉNERGIE THERMIQUE À L'AIDE DE MATÉRIAUX À CHANGEMENT DE PHASE

(30) Priority: 22.10.2012 IT MI20121791
(43) Date of publication of application: 26.08.2015
(73) Proprietor: Danieli & C. Officine Meccaniche SpA, 33042 Buttrio (UD) (IT)
(72) Inventor: NARDIN, Gioacchino, 34100 Trieste (IT)
(74) Representative: Petraz, Gilberto Luigi
(86) International application number: PCT/IB2013/002362
(87) International publication number: WO 2014/064508

(56) References cited:
- JP-A- S5 866 791
- JP-A- S57 157 994
- US-A1- 2011 240 249

## Description

### FIELD OF THE INVENTION

The present disclosure concerns an apparatus and a method able to effect the extraction of heat flows from off-gases, with a considerable energy content, from industrial and service processes, to transfer them to a defined external user device (UE).

The transfer is obtained with the assistance of phase change materials, which in contact with the hot off-gases, that is, having a temperature equal to or higher than 100°C, operate in a solid/liquid phase transition and with heat exchangers in contact with, or immersed in, the phase change materials where inside the heat exchangers heat-carrying fluids flow, which extract heat flows to feed the external user device.

The external user device may consist for example of a producer of electric and/or heat energy, with deferred timing. Moreover, the invention has a moderating effect, reducing the variability of the temperatures and thermal powers downstream of the apparatus, so as to facilitate, technically and economically, a subsequent energy recovery using known technologies.

The transfer of the heat flows from the hot off-gases to an external user device can be managed in the value and temporal deferment with respect to the extraction, according to the needs of the external user device. The heat energy transfer apparatus in question will be referred to hereafter, synthetically, as "TET".

### BACKGROUND OF THE INVENTION

The continuous increase in costs of energy vectors and the regulations of the various States that incentivize the production of heat and electric energy from alternative sources and from energy recovery have promoted, over the years, the development of technologies to recover energy from off-gases from numerous industrial and service processes, which have a high energy content. The energy recovery is used to feed external user devices or to increase the efficiency of the processes that have generated the hot gases, reducing the energy factors understood as energy used per unit of product or service.

Apparatuses are known, which carry out a heat energy recovery of high temperature gases from combustion processes or chemical reaction processes in order to pre-heat the charge material, or the comburent entering the combustion chamber, or to start chemical processes at low and medium temperature. US 2011/240249 A1 and JP S58 66791 A disclose apparatuses for the extraction of heat energy from hot off-gases from productive or service processes and for the transfer of said energy to external user devices. Each of said apparatuses is positioned in contact with said off-gases and comprises a plurality of containing chambers, each enclosing a single section, each of which being defined by at least a heat exchange module having a container enclosing a first phase change material, and a heat exchanger disposed in contact with said first phase change material for extracting heat.

Direct heat exchange apparatuses are also known, where air, water, diathermic oil or steam flow as the heat-carrying fluid, to feed thermal/electric user devices, for low/high temperature pre-heating, in order to produce electric and/or heat energy.

Technologies are known, for limiting the variations in temperature and thermal power to feed the generic user device consisting of tanks with the function of accumulators (water, steam, oil).

One particular known technology consists of molten salts that are used for example in the field of thermodynamic solar power, both as heat-carrying fluids and as heat accumulators.

As an emblematic but non-restrictive example, reference can be made to electric steel-works, where the total energy dissipated with the gases is around 38% of the total energy input.

The recovery intervenes on the off-gases on an energy quotient available equal to about 21%, which would otherwise be dispersed along the fume purification line including expulsion into the atmosphere.

One known apparatus for heat recovery of process gases adopts direct exchangers inside which heat-carrying fluids are made to flow and which feed external user devices; the direct exchangers generate variable heat flows that consistently follow the development of the temperatures and flow rates of the fumes.

The direct exchange apparatus has the disadvantage that the exchangers and user apparatuses must be sized on the maximum values of the heat flows, reducing the mean use thereof, and also the possible electric generator operates with less than optimum mean performances.

One known technology for limiting the variability of the heat flows feeding the user device is the heat accumulator, but this has the disadvantage that it is very expensive, particularly if built to resist high pressures.

A technique is also known to reduce the variability in the supply of steam to an external user device which provides to make the steam produced transit with a variable flow rate in a steam accumulator.

Another known technology for obviating the variability of the thermal powers extracted is to integrate the recovery system with apparatuses that generate additional thermal powers; in this case, the plant system assumes a bigger size, with an important and integrative recourse to traditional fuels or vectors which negatively affect the economy of the recovery.

One solution that has been operatively applied provides to pre-heat the scrap contained in the loading baskets for electric furnaces. In this case, in addition to the plant complications due to the logistics of the baskets, there are also technological problems due to the presence in the charge of low-melting substances, with possible negative consequences for the functioning of the furnace and for productivity. Other problems are of an environmental type, connected to the possible presence of dioxins in the pre-heating fumes and the formation of toxic products due to the composition of the preheated charge which could require post-combustion systems for the fumes.

Recovering the sensible heat of the fumes, with said heat being given up to the scrap, can be carried out after dilution with false air and without adopting auxiliary integrative burners at low temperature (300°-350° C), avoiding the complications of pre-heating at high temperature, but far from the conditions considered optimal for achieving maximum energy saving (600°-650° C).

In revamping situations, that is, when existing systems are updated, the obvious logistic and plant-design difficulties of adopting pre-heating systems limits the spread of this technology.

This recovery system is interesting in plants with high productivity, where the flow rates and temperatures of the fumes are such that they can be adequately exploited and the duration of the melting cycle (Tap-to-Tap) is indicatively more than 70 minutes.

One technology, known as the "Twin Shell" process, provides a melting furnace with two shells having the electrode-bearing system in common. In this type of process, while the material is being melted in the first shell, a basket is loaded into the second shell and, when the first passes to tapping, melting is started in the second. In general the gases coming from the furnace that is melting the charge material are made to transit in the furnace where loading is being performed. However, for environmental reasons, in this case too it is often necessary to use burners to carry out pre-heating.

The so-called "Contiarc" furnace is also known, which is an arc furnace fed in direct current (DC), in which the metal charge to be melted is fed continuously into the upper part of the shell at a speed equal to the melting speed in the lower part. During the descent, the scrap is hit by the ascending gases that therefore provide to pre-heat it.

Another electric furnace, the so-called "Comelt", also fed in direct current (DC), provides a vertical pre-heating shell which uses the gases generated in the adjacent (inclinable) melting body.

For example, the shell furnace or "Shaft furnace" uses a supplementary shell (or two shells used alternately), water-cooled and positioned above the melting furnace, where the gases are produced that will pre-heat the scrap. In this configuration too, oxy-fuel burners are provided to integrate the sensible heat given up by the fumes.

The evolution of technologies for loading reactors, intended to contain the downtimes and to shorten the duration of the melting cycle, have led to the manufacture of continuous supply systems, the so-called "CONSTEEL®", in which the scrap is pre-heated on the conveyor belt by the hot off-gases from the electric arc furnace. This system allows to reduce the need for electric energy by about 10%, and gives greater productivity.

With regard to energy recovery for heat purposes only, this is practicable in association with tele-heating networks, considering the low economic importance of heat energy with low heat content in the industrial field. In other words, it is necessary to give up heat energy to nearby industrial or civil establishments.

Another recovery process is known, although it has not yet been achieved industrially, based on phase change materials (PCM) with high melting temperature, such as copper, which melts at about 1083°C. This technology provides to accumulate the energy contained in the gases exiting from the furnace in a phase change material which will function as a heat source for the endothermic reaction of steam-reforming of methane, in order to produce hydrogen.

It is also known that electric arc furnaces used in steel works are always characterized by the presence of powerful water cooling systems that require complex and voluminous dissipative cooling systems that do not provide any kind of heat recovery. These cooling systems are located on the walls of the shell, on the roof of the melting furnace, on the first segments of the pipes that convey the fumes from the fourth hole of the furnace to the purification systems, and their purpose is to safeguard the integrity of the shell and to reduce wear on the protected refractories and the cooled metal parts.

In known energy recovery technologies, hot water and steam are used as heat-carrying fluids, which have low heat characteristics, relatively low temperatures and pressures because of the variability of the flows of thermal power of the off-gases; the performances they give are limited.

Another disadvantage of known energy recovery technologies in electric arc furnaces, but not only, is the problem of sizing the apparatuses for the load peaks, with a double inefficiency, connected both to the fact that the initial investments for making the plants are used only partly, on average, and also to the fact that the energy recovery yields are limited in relation to the mean reduction of the nominal powers.

The main purpose of the present disclosure is to obtain a new apparatus and a new method to extract heat energy from hot off-gases from industrial and service processes and to transfer said heat energy to feed an external user device.

Another purpose of the present disclosure is to obtain an apparatus and a method to transfer heat energy which allow to maintain a material at least partly in a condition of constant phase transition and therefore at an almost constant temperature, which condition is particularly useful in heat exchangers.

Another purpose of the present disclosure is to obtain an apparatus and a method that are able to extract heat energy from a process having high variability over time in terms of temperatures and/or flow rates and/or thermal powers, or having an intermittent functioning, in order to feed an external user device with a constant heat flow, or in any case managed depending on the requirements of said user device.

Another purpose of the present disclosure is to obtain an apparatus that allows to obtain a consistent energy reserve, essentially in the form of latent heat, at high temperature, useful for regulating the process that has generated the hot off-gases in a section of the plant that is different from that where the energy is extracted, and with a managed temporal deferment.

Another purpose of the present disclosure is to obtain an apparatus and a method that allow to totally or partly replace the circuits, used for example in the steel industry, for cooling and protecting the structures, which normally require high powers and are very dissipative.

Another purpose of the present disclosure is to obtain an apparatus and a method that allow to totally or partly replace the heat exchange systems, very dissipative, needed to cool the off-gases in heat processes, such as for example those in a cremation furnace.

Another purpose of the present disclosure is to obtain an apparatus able to heat ambient air to high temperatures to be introduced into the chimneys in order to eliminate the possible plume of steam.

Another purpose of the present disclosure is to obtain an apparatus that uses molten salts as the heat-carrying fluid, with extraction temperatures that can reach 550°C and with relatively high thermal powers and temperatures

Another purpose of the present disclosure is to obtain an apparatus and a method that selectively allow to make complete Rankine thermodynamic cycles, or alternatively that allow to perform only the superheating step, particularly delicate both from the thermodynamic point of view, given the high process temperatures, and also from the technological point of view, so as to prevent corrosion and wear, for example.

The Applicant has devised, sized and designed the method according to the present invention, to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus for extracting heat energy from off-gases from productive or service processes and for transferring said energy to an external user device, is positioned at least partly inside a containing chamber or inside one or more pipes of a plant performing said productive or service processes and in contact with said off-gases.

According to the present disclosure, the apparatus comprises at least two sections, each of which is defined by at least a heat exchange module having:
- a container/exchanger, hollow in shape, made of metal material with a high heat conductivity, in particular having a heat conductivity equal to or greater than 10 W/mK, and located at least partly in contact with the off-gases, in order to exchange heat energy with them;
- a first phase change material, having high heat diffusivity, that is, equal to or greater than 10⁻⁷ m²/s, for example greater than 10⁻⁶ m²/s, located inside the container/exchanger;
- an extraction exchanger, disposed in contact with the first phase change material and having delivery and return pipes;
- a heat-carrying fluid associated to the extraction exchanger and circulating in the pipes to extract and transfer the heat energy accumulated by the first phase change material;
- movement means associated to the pipes in order to move the heat-carrying fluid flowing through them and to convey and manage the flow rate of the heat-carrying fluid to selectively determine, for each section, a variation in the values of the heat flow extracted indirectly, that is, in a mediated manner, from the off-gases and to achieve a condition of constant phase transition of the first phase change material of each section.

This advantageously allows, by regulating the flow rate of the heat-carrying fluid of each section, to extract heat flows from the off-gases, to be added to and conveyed in parallel to feed an external user device with overall characteristics of constant values, or in any case managed.

In a variant of the present disclosure, the means that move the heat-carrying fluid are configured to obtain the at least partial phase change of the first phase change material of each section alternately and complementarily between the sections.

According to one feature of the present disclosure, the user device downstream can be fed by means of connections in series or in parallel connection networks of the delivery or return pipes of each section.

In some forms of embodiment of the present disclosure, the apparatus also comprises at least a container containing a second phase change material. The container is at least partly immersed in the first phase change material, and has a separation surface which separates the second phase change material contained in the container from the adjacent first phase change material and allows heat exchange between the first and second phase change materials.

The second phase change material, which advantageously has a high heat capacity and a melting temperature lower than the melting temperature of the first phase change material, allows to accumulate heat energy and acts as an additional store in the accumulation heat capacity of the first phase change material. In this case it is possible to alternately force the sections to under-cooling in the solid phase of the first phase change material, to determine the solidification of the second phase change material. After this, a subsequent heating of the first phase change material follows, to obtain the melting at least of the second phase change material.

The present invention concerns a method for extracting heat energy from off-gases from productive or service processes and for transferring said energy to an external user device by means of an apparatus as described above and comprising at least two sections.

According to one feature of the present invention, the method provides to thermally force each of the sections by managing the flow of a heat-carrying fluid circulating in delivery and return pipes present in each section and corresponding extraction exchanger, in order to selectively determine a thermal flow extracted from a first phase change material greater or lesser than the thermal flow yielded by the off-gases. In this way it is possible to respectively determine thermo-physical states of at least partial melting or solidification, and vice versa, in the first phase change material of each section.

In this way we obtain the advantage of being able to manage, by switching the thermal powers delivered or absorbed by each section, the constancy of the thermal power transferred from the off-gases to the user device downstream of the apparatus.

According to the invention, the method in question provides to force the sections in an alternated and complementary manner, so that the thermo-physical states are determined in an alternate manner in each section and complementary between the different sections.

According to another feature of the present invention, the method provides to alternate over time the solidification phases and melting phases of the first phase change material of each section, to determine a continuous state of phase transition of said first phase change material, so as to transfer a substantially constant, or in any case managed, overall power to the user device downstream.

### BRIEF DESCRIPTION OF THE DRAWINGS

These and other characteristics of the present invention will become apparent from the following description of functional and process diagrams of some preferential forms of embodiment, given as a non-restrictive example with reference to the attached drawings wherein:
- fig. 1 schematically shows an apparatus for taking and transferring heat energy according to the present disclosure and its functions;
- fig. 2 schematically shows the composition and function of each heat exchange module;
- fig. 3 schematically shows the composition and function of the generic section;
- fig. 4 shows the diagram of the feed circuit of the apparatus in connection with the external user device;
- fig. 5 schematically shows an apparatus consisting of 2 sections located in parallel with respect to the off-gases;
- fig. 6 schematically shows an apparatus consisting of 2 sections located in series with respect to the off-gases;
- fig. 7 schematically shows the functioning method of the apparatus configured as in fig. 5;
- fig. 8 schematically shows the functioning method of an apparatus consisting of 3 sections, the first two in loading/unloading opposition and the third for fine tuning;
- fig. 9 schematically shows the functioning method of an apparatus consisting of 3 sections in the presence of intermittent off-gases;
- fig. 10 schematically shows a cremation plant with the point where the apparatus is inserted;
- fig. 11 shows the functional diagram of the new apparatus, associated with the cremation plant in fig. 10;
- fig. 12 schematically shows the plan configuration of the apparatus in fig. 11, with the dimensions;
- fig. 13 shows the geometric constructional characteristics of each heat exchange module as in figs. 11 and 12;
- fig. 14 shows the decline in the temperature value of the aluminum in the absence of off-gases in heat exchange modules as shown in fig. 13;
- fig. 15 schematically shows the energy balance of the process of producing steel with an electric arc furnace;
- fig. 16 shows graphically the temperature characteristics of the hot off-gases in a cyclical process entering the settling chamber;
- fig. 17 schematically shows the insertion of the apparatus in the settling chamber of an electric arc furnace;
- fig. 18 schematically shows in plan the disposition of the individual modules inside the settling chamber;
- fig. 19 schematically shows the constructional characteristics of a module of the apparatus using CO2 as the heat-carrying fluid;
- fig. 20 schematically shows the constructional characteristics of a module of the apparatus in which the heat-carrying fluid is defined by molten salts;
- fig. 21 shows the diagram of the distribution network of the heat-carrying fluid;
- fig. 22 shows the use of the apparatus in combination with the tank for accumulating molten salts.

### DETAILED DESCRIPTION OF SOME FORMS OF EMBODIMENT

With reference to the attached drawings, an apparatus 1 for transferring heat energy using phase change materials made according to the present disclosure can be associated with a containing chamber or with one or more channels/pipes where hot off-gases (OG) transit, from an industrial or service process. The off-gases (OG), having a temperature equal to or more than 100°C, are characterized by a spectrum of instantaneous values of flow rate (Q_{og,τ}), temperature (t_{og,τ}) and heat flows or powers (Φ_{og,τ}). In particular, in the case of cyclical or intermittent processes (τₚ), the off-gases (OG) are characterized by median flow rate values (Q_{og,med}), temperature (t_{og,med}) and power (Φ_{og,med}).

The apparatus comprises two or more sections (SECₙ). Each section consists of one or more heat exchange modules (MODₘ).

Each heat exchange module (MODⱼ) comprises a metal container/exchanger (CS), having great mechanical resistance and resistance to wear at the working temperatures, located in direct contact with the off-gases (OG).

The container/exchanger (CS) has a hollow shape defined by a lateral wall that delimits a volume where a first filling body is inserted, consisting of a first phase change material, having high heat diffusivity, that is, greater than or equal to 10⁻⁷ m²/s, for example greater than or equal to 10⁻⁶ m²/s, and indicated hereafter by the term "transfer material". The transfer material (PCM_{d}) is characterized by a phase transition temperature (t_{d},_{fus}) which can be, in possible forms of embodiment, equal to or around, above or below, the median temperature of the off-gases (t_{og,med}).

The function of the container/exchanger (CS) is to exchange heat flows (Φ) with the hot process off-gases (OG) by means of the high heat conductivity wall, and to transmit it to the transfer material (PCM_{d}) which spreads it "rapidly" inside its mass.

In contact with or immersed in the transfer material (PCM_{d}) a heat exchanger is located, named extraction exchanger (SE), with corresponding delivery and return pipes. The delivery and return pipes of the heat exchange modules (MODₘ) belonging to the generic section (SECᵢ) are connected to each other, in the most complete configuration, by a common delivery and return circuit named *"section distribution circuit*" (D_{sec}).

In some simplified forms of embodiment, the circuit could be a delivery circuit only, with no return provided (open circuit).

The type of distribution circuit (D_{sec}) responds to technological logics of heat exchange and can be indifferently either in parallel, in series or in groups, with reference to the delivery and return pipes of the heat exchange modules (MODₘ).

The section distribution circuits (D_{sec}) are in turn connected to the external user device (UE) by means of a connection circuit in parallel, named "*feed circuit of the apparatus"* (Dₐₚₚ). The external user device (UE) can be sized in relation to the technical capacities of the apparatus, or pre-existing with contingent performances.

Inside the section distribution circuits (D_{sec,i}) and the extraction exchangers (SE) a heat-carrying fluid (FT) flows, with a flow rate (Q_{ft}) that extracts heat flows (Φₑₛₜ) from the transfer material (PCM_{d}).

The value of the flow rate (Q_{ft}) of the heat-carrying fluid (FT) is determined by a drive pressure (ΔHₘₒ) between upstream and downstream of the section distribution circuit (D_{sec}).

The value of the drive pressure (ΔHₘₒ) and hence of the flow rate (Q_{ft}) of the heat-carrying liquid (FT) is generated, in the case of liquids, by a variable flow rate pump (POᵥᵣ) or, in the case of gas, by a variable flow rate ventilator (VEᵥᵣ).

The variation in the flow rate can be obtained also by pumps or ventilators with fixed revs (PO_{fs} or VE_{fs}), equipped with divertor or mixing valves, or electronic regulators, for example inverters.

The variation in the flow rate (Q_{ft}) determines a corresponding variation in the speed of the heat-carrying fluid (v_{ft}) inside the extraction exchangers (SE).

The value of transmittance (Uₛₑ) of the wall of the generic external exchanger (SE) in contact with or immersed in the transfer material (PCM_{d}) is a prevalent function of the liminary coefficient of the heat-carrying fluid (α_{ft}) which in turn is an increasing function of its speed (v_{ft}).

By varying the flow rate (Q_{ft}) of the heat-carrying fluid and hence its speed (v_{ft}), the transmittance (Uₛₑ) and the flow of heat energy extracted (Φₑₛₜ) from the transfer material (PCM_{d}) also varies; the parameters shown therefore increase with the flow rate, and vice versa.

In variant solutions, the value of the drive pressure (ΔHₘₒ) can be instantaneously or on average zero, and hence also the speed of the heat-carrying fluid (v_{ft}) can be zero. In these solutions, the corresponding section (SECᵢ) with a zero drive pressure ΔHₘₒ) behaves passively.

Referring to a generic section (SECᵢ), for each thermo-physical state of the transfer material (PCM_{d}) and for each thermodynamic state of the off-gases (OG), instant by instant (τ), in the phases where the temperature of the off-gases is higher than that of the transfer material (PCM_{d}), there exists a ΔH_{mo,eq} which determines a flow rate (Q_{ft,eq}) and a speed of the heat-carrying fluid (v_{ft,eq}) denominated "balanced", which does not modify the state of the transfer material (PCM_{d}) except for heat inertias.

The balanced flow rate (Q_{ft,eq}), instant by instant (τ), determines equality of the heat flows (Φᵢₘₘ) which are transferred from the off-gases (OG) to the transfer material (PCM_{d}) and those extracted (Φₑₛₜ) from the heat-carrying fluid (FT) and that is, with reference to the transfer material, a zero heat balance (ΔΦ_{τ} = Φᵢₘₘ - Φₑₛₜ = 0).

In the functioning of the apparatus, the physical states of the transfer material (PCM_{d}) in contact with the heat-carrying fluid (FT) can be solid and liquid with different thermo-physical characteristics (conductivity etc.); the instantaneous balance speed (v_{ft,eq}) changes depending on whether the transfer material (PCM_{d}) in contact with the heat-carrying fluid (FT) is in its solid or liquid phase; the balance speed (v_{ft,eq}) is greater in the solid phase due to its greater heat conductivity.

These considerations made for a generic instant (τ) can be applied in terms of a periodic process cycle (τₚ) referring to the mean values in the time cycle.

For each section of the apparatus (SECᵢ), with reference to a complete time of the periodic cycle of a process (τₚ), there exists a mean flow rate (Q_{ft,med}) and a speed of the heat-carrying fluid (v_{ft,med,p}) that extracts an overall value of energy from the transfer material (Φ_{est,eq}) such as to equal the overall value of energy removed from the off-gases (OG) (Φ_{imm,med}), returning it to the initial state of the cycle. Setting a speed of the heat-carrying fluid (v_{ft}) that is higher than the mean balance speed (v_{ft,med}>v_{ft,eq,p}), for a complete process time (τₚ), determines an overall cooling of the transfer material (PCM_{d}) which progressively leads to its solidification if initially melted; in general the extraction of heat energy from the transfer material is called *"unloading phase*"*;* on the contrary, if we set for the time (τₚ) a speed lower than the mean balance speed (v_{ft,med}>v_{ft,eq,p}), possibly even zero, then all in all a heating is determined of the mass of transfer material (PCM_{d}) which leads to its progressive melting, if initially in the solid state; in general the increase in heat energy of the transfer material (PCM_{d}) is called *"loading phase".*

In particular, but not only, by acting on the value of the extraction flow rate and on the time of application of said flow rate, it is possible to determine the state of complete solidification of the whole mass of transfer material *"complete unloading phase",* with reference to the phase transition enthalpic heat, and then, in a later period of time, to reduce the flow rate values so as to determine the complete *melting "complete loading phase",* if initially solid, again referring to the phase transition enthalpic heat. The combination of two complete, opposite phases is called *"complete transition cycle",* meaning a cycle with a complete melting and a complete solidification.

A variant of the management method consists in managing the flow rates of the heat-carrying fluid (FT) of each section (SECᵢ) of the apparatus and their application time (τ) in order to limit solidification and melting to a portion of the transfer material present in the *"partial transition cycle"*.

By alternating over time the loading and unloading phases it is possible to determine a continuous state of phase transition of the transfer material, characterized by a constant temperature.

Another variant of the method is to take the transfer material, during the unloading phase, to a temperature lower than the solidification temperature and during the loading phase to a temperature higher than the melting temperature; in this functional configuration the heat energy exchanged per unit of mass of transfer material is greater than in the other methods described. This functional mode is called "*supertransition cycle".* The complete and partial transition cycles take place at a constant temperature. In the supertransition cycle the temperatures of the transfer material will also assume temperatures different from the phase transition temperature.

In all the functional configurations described, each section constitutes a considerable accumulation of heat energy at high temperature, particularly useful for exploitation in a generic external user device.

With reference to the individual section of the apparatus, the alternation of values of the powers extracted, if sent directly to feed an external user device, poses some economic problems like the partial use of the user and technical problems due to the limited mean yields.

We shall now describe how the configuration of the apparatus in two or more sections and the method for managing the flow rates according to the invention allows to overcome the problems described above.

The method adopted exploits the important peculiarity of the apparatus, which is that it can manage the functioning of each section (SECᵢ) in which it is composed with independent modes by acting on the flow rate (Q_{ft}) of the heat-carrying fluid (FT).

For simplicity, we shall consider an apparatus with two sections (SEC₁ and SEC₂), with the same configuration and characteristics, immersed in parallel in the off-gases (OG).

Two different functional phases (phase a and phase b) are alternately and successively set, and are forced to function simultaneously in "opposition" with reference to the loading and unloading phases.

In phase a, SEC₁ is forced to a progressive heating (loading) by reducing the speed of the heat-carrying fluid below the mean balance speed (v_{ft,med}<V_{ft,eq,p}), also possibly to a zero value (v_{ft,med} =0), until a partial or complete melting of the entire mass of the transfer material is obtained, and possibly a subsequent superheating; at the same time, SEC₂ is forced to a progressive cooling by increasing the speed of the heat-carrying fluid above the mean balance speed (v_{ft,med}>v_{ft,eq,p}) until a partial or complete solidification is obtained, and possibly a subsequent cooling of the entire mass of the transfer material in the solid phase.

In phase b, when phase a is completed, the values of the flow rates and speeds in the two sections are inverted, forcing them to invert the signs of the heat balances with respect to the previous phase, until an opposite behavior is determined, so that section 1 which was in the loading phase passes to the unloading phase and section 2 which was previously in the unloading phase passes to the loading phase.

The times of the loading phase and unloading phase of each section depend on the flow rates of the heat-carrying fluid and the overall heat capacity of the phase change materials (type and weight of the phase change materials).

A fundamental feature of the invention is that the two powers extracted by the two sections are conveyed in parallel to the external user device and therefore are added to each other to feed it.

The apparatus consisting of the two sections feeds the user device in phase a) with the sum of the power extracted by section 1 (Φ₁ₐ) and the power extracted in section 2 (Φ₂ₐ), respectively having a higher value and a lower value than the mean value (Φ_{med,p}); in phase b the two powers extracted are inverted in their values with invariance of their sum (Φₜₒₜ).

A peculiarity of the apparatus consisting of two sections is therefore that it can function with a "commutative" property with respect to the external user device. It is possible to vary the flows of thermal power extracted by the two sections by inducing different thermo-physical states without varying the flow of overall thermal power that feeds the external user device.

By alternating the loading and unloading phases in succession, in the different types of cycles, in the presence of off-gases having constant or variable or intermittent characteristics, the apparatus supplies an almost constant extracted thermal power and temperature, which is useful and optimum for external user devices (turbines, exchangers, etc.).

An energy flow with almost constant characteristics in power and temperature prevents the technical and economic inefficiencies of known apparatuses.

The apparatus thus configured can in any case be managed at variable powers as well, depending on the requirements of the user device.

In the more general situation the sections can have different characteristics in terms of sizes, type and quantity of transfer material etc., or can be put in series instead of in parallel or in a mixed configuration without the functioning logic being altered.

The apparatus can be produced with three sections, where the third section can intervene to improve the adjustability characteristics overall; the first two sections function as already described previously, while the third intervenes as an integration for fine tuning the powers extracted and to be sent to the external user device, and also to determine the unloading times and loading times of the other two sections, with a greater management flexibility.

If the apparatus consists of four sections, two can operate in loading and two in unloading. For numbers of sections of more than four, what we said before applies.

In the presence of intermittent and periodic cycles, for example where the thermal powers of the off-gases are concentrated in a limited time range, or in cycles where the off-gases have considerably variable temperatures and thermal power, it is advantageous to instal an apparatus with several sections where the loading phase takes place simultaneously for all the sections in the presence of the off-gases (OG) during the process phases in which the off-gases (OG) have high temperature and thermal power, whereas the unloading phase occurs in a later period of time so as to cover the whole periodic cycle, or to deal with the lower temperature peaks and thermal power of the off-gases (OG), and to obtain a continuous extraction thermal power that is more limited in value but distributed over time.

The same purposes described above can also be obtained with a single section, but not with the same operating reliability and flexibility in management for the purposes of a power extracted with the desired characteristics.

The number of sections, two or more than two, will depend on features connected to the level of variability or intermittence of the spectrum of temperature and thermal power of the off-gases, the bulk, both in technological and plant-design terms, and finally the requirements of thermal power absorption by the new user device, suitably sized, or a pre-existing user device.

A variant of the previous configurations provides to use a second phase change material, different from the first phase change material and known as *"helper material"* (PCMₕ). The helper material is immersed in the first transfer material (PCM_{d}) and separated from it by a separation surface that not only functions as a container but also as a heat exchanger, and is known as internal exchanger (SI).

The helper material (PCMₕ) is generally characterized by a lower phase transition temperature than that of the transfer material (PCM_{d}), a high latent phase change heat, a "low" specific weight and a "limited" cost per unit in weight. The helper material (PCMₕ) contributes to the overall heat capacity of the apparatus and reduces its weight and cost.

In general, the helper material is also characterized by low conductivity in both the solid and liquid state (for example the molten salts used industrially, such as NaNO3-KNO3 or Kcl-MgCl2 and others).

The low heat conductivity of the helper material (PCMₕ) limits the heat transmittance with the transfer material and entails low heat diffusivity; to obviate the limited heat transmittance (U) and obtain considerable heat flows between the transfer PCM and the helper PCM, internal exchangers (SI) are used, made with a big exchange surface with respect to the respective containers/exchangers (SI/CS≥1). The low heat diffusivity can be contrasted by reducing the thicknesses of the helper material.

In some particular forms of embodiment, it is possible to adopt transfer materials (for example tin) with a phase transition temperature lower than the helper material (molten salts). The structure of the apparatus and the management method do not change, however.

To determine the phase transition of the helper material, it is necessary to manage the individual sections of the apparatus, causing in the transfer material temperatures that are around the phase transition temperature of the helper material.

In the case of off-gases with a mean temperature of more than 600°C and phases with temperatures of more than 700°C, pure or alloyed (for example 5075 MG) aluminum can be used as the first transfer material, with a solidification-melting range of 520-660°C and, as helper material, molten salts with maximum operating temperatures of 590°C and melting temperatures of around 260°C. The maximum temperatures of the molten aluminum alloy above 590°C can generate temperatures of the wall of the internal exchanger (SI) that are technologically intolerable, for example for reasons of corrosiveness, or the thermomechanical stresses that are generated, etc.

In this case, by putting between the aluminum and the helper material another transfer material with the corresponding separation surfaces and heat exchange surfaces, for example lead with its melting temperature of 370°C, it is possible to manage the apparatus without the molten salts reaching temperatures above 590°C. A thermocouple measures the temperature of the lead and depending on its value the extraction power of the extraction exchanger (SE) is managed, preventing the temperature of the superheated molten lead from exceeding maximum values that are tolerated by the helper material.

Variants of the configurations of the apparatus described above provide that the external exchanger (SE) is made in contact with the helper material or the second transfer material.

The phase change materials, both transfer and helper, are chosen suitably so that they do not run into technological problems at the maximum temperatures of the off-gases (boiling temperature not exceeded, corrosion, wear, etc.).

In sizing the exchangers it is necessary to define the minimum speed of the heat-carrying fluid; in the case of gases (air, CO2, steam, etc.) the minimum speed can even be zero, while in the case of liquids (hot or superheated water, diathermic oil, molten salts, molten metals such as sodium, lead or other low-melting metals, or low-melting metal alloys such as eutectic alloys of lead-tin, lead-bismuth, tin-bismuth etc.), it is necessary to take into account the boiling temperature of the liquids used at the different pressures and the critical functioning conditions; in the case of molten salts, molten metals or molten metal alloys, it is necessary to avoid temperatures that would determine corrosive aggressivity and other problems; in the case of diathermic oils there are problems of safety and maximum temperature limits. In the case of superheated water it will be necessary to determine the minimum functioning speeds at different pressures to prevent localized evaporations and critical functioning conditions.

We have therefore described the process characteristics of the invention in its different variants, the functioning of the different elements and the main technological elements that guide the choice of the materials and the plant-design.

The elements that make up each section (SECᵢ), in the most articulated configuration, are the container/exchanger (CS), into which a first transfer material (PCM_{d,1}) is inserted; possible other transfer materials (PCM_{d,2}) with the corresponding internal exchangers (SI), possible helper materials (PCMₕ) with corresponding internal exchangers (SI), the extraction exchanger (SE) with corresponding delivery and return pipes connected to a distribution circuit (D_{sec}) and the variable flow-rate pump or ventilator (POᵥᵣ or VEᵥᵣ). The apparatus according to the present disclosure (TET) consists of the combination of the different sections (SECₙ) connected in parallel by a delivery network (Dₐₚₚ) to the external user device (UE); a common heat-carrying fluid (FT) flows through the exchangers and distribution networks.

The elements through which the heat flows transit are the container/exchanger (CS), the internal exchangers (SI) and the extraction exchanger (SE); the elements that accumulate and/or give up heat energy are: the transfer materials (PCM_{d}), the helper materials (PCMₕ); the element that extracts the heat flow is the heat-carrying fluid (FT).

The elements that manage each individual section are its pump (POᵥᵣ) or its ventilator (Veᵥᵣ); the management of the apparatus in question (TET) is a function of the complementary and combined management of the pumps or ventilators of the sections in their entirety. The off-gases (OG) give up total heat energy which is given up to the external user device (UE) modulated in the thermal power and temporally deferred with respect to the extraction. The apparatus also operates a moderation of the temperatures in variable spectrum off-gases.

The present disclosure (TET), to take an electrical analogy, functions like a "straightener followed by a capacitor", where in our case the capacitor consists of the phase change material with its latent heat capacity. The apparatus could therefore be called "heat straightener", or "heat pump with thermal pistons", where the term "pump" refers to the transfer function of heat flows and the thermal pistons refer to the alternate movement of the melting fronts of the individual sections (pistons).

We shall now give the formulas of the new apparatus which calculate its performance.

The main function of the invention is extraction (Fnₑₛ), which is expressed by the ratio of the mean power extracted (Φ_{es, med}) over the mean power possessed by the hot off-gases (Φ_{og, med}); with the other conditions being the same, the greater the difference in the mean temperature between the off-gases and the melting temperature of the PCM_{d,1}, then the greater is the power of extraction of heat energy; conversely, the second principle thermodynamic characteristics are lower.

Another function of the invention is the moderating action (Fnₘₒ) of the off-gases, which is always present in variable temperature effluents, understood as the capacity of reducing the maximum temperature (t_{og,max}), increasing the minimum temperature (t_{og,min}), reducing the difference between maximum and minimum temperatures (Δt_{og}); reduction in variance (VARt) and the standard deviation (DSₜ) of temperatures and heat flows (VAR_{Φ}, DS_{Φ}).

The efficiency of the moderating function is expressed by the formula: Efₘₒ = 1-(VAR_{t,out}/VAR_{t,in}≤1.

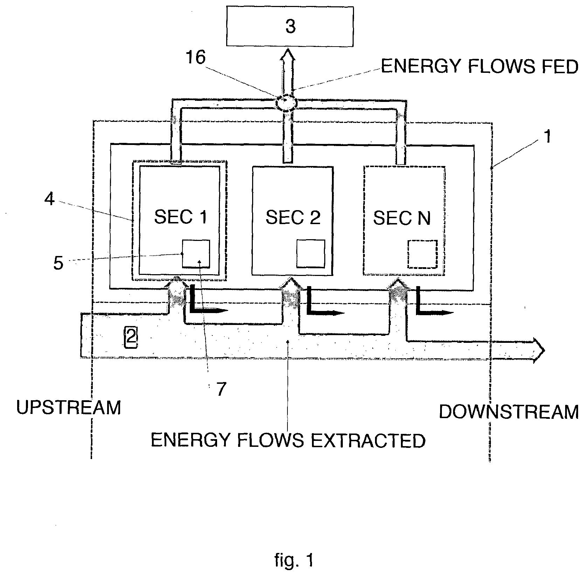

Fig. 1 schematically shows the apparatus 1 and its functions. The apparatus 1 transfers heat flows from an off-gas 2, with which it is in contact or immersed, to an external user device 3, to use it in a plant for producing electric or heat energy, or in co-generation. Moreover, the heat flows exchanged with the off-gases 2 cause a reduction in the variance of the temperatures and powers in the off-gases 2 themselves, downstream of the apparatus 1. The reduction in the variance of the temperatures of the off-gases 2 occurs by subtracting heat flows from the hot off-gases 2 when the temperatures are higher than those of the transfer material 7, and by giving up heat flows when the heat conditions are the opposite. The apparatus 1 consists of two or more sections 4 and each section 4 consists of one or more heat exchange modules 5.

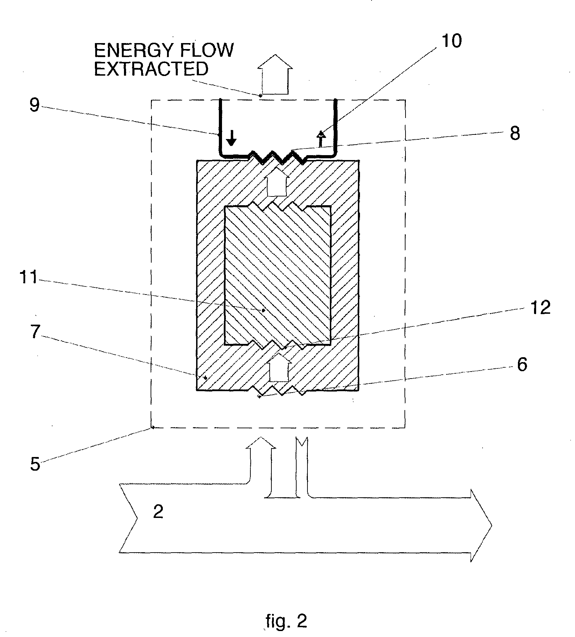

Fig. 2 schematically shows the composition and function of each heat exchange module 5. Each heat exchange module 5 consists of a container/ exchanger 6 where a high heat-diffusivity transfer material 7 is positioned and operates essentially in solid-liquid phase transition. An extraction exchanger 8 is put in contact with the transfer material 7, with the corresponding delivery and return pipes 9. A heat-carrying fluid 10, gas or liquid, passes through the exchanger 8 and the pipes 9. The container/exchanger 6 exchanges heat flows at entry and at exit with the off-gases 2, with heating and cooling processes that are transmitted to the transfer material 7. The heat flows extracted from the off-gases 2 and given up to the transfer material 7 are generally prevalent with respect to the heat flows given up to the off-gases 2, since the mean temperature of the off-gases 2 is higher than the phase transition temperature of the transfer material 7. Possibly, but not necessarily, the heat exchange module 5 can be integrated with another phase change material known as helper material 11, immersed in the first transfer material 7 and separated from it by a separation surface called internal exchanger 12. The helper material 11 has a phase transition temperature that is generally lower than the phase transition temperature of the transfer material 7. The helper material 11 exchanges energy flows at entry and at exit with the transfer material 7, contributing to the overall latent heat of the heat exchange module 5 with costs and weights that are relatively low compared with the transfer material 7. The heat exchange module 5 is a heat energy accumulator that is used to extract heat energy with heat flows managed with a temporal deferment with respect to the heat flows given up by the off-gases 2.

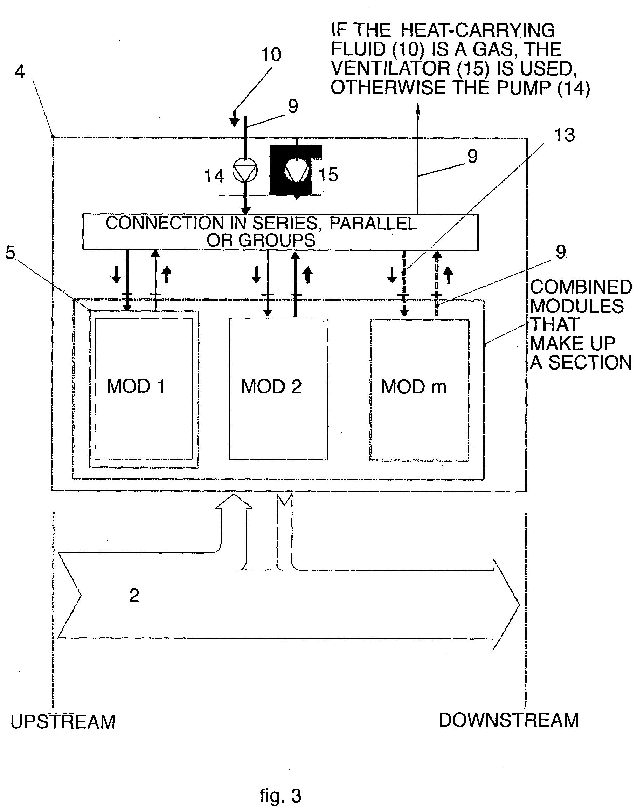

Fig. 3 schematically shows the composition and function of each section 4 of the apparatus 1. The generic section 4 consists of at least one heat exchange module 5, generally a plurality, as described in fig. 2. The generic section 4 is characterized by a single distribution network 13, delivery and return, which connects all the delivery and return pipes 9 of all the heat exchange modules 5 belonging to the section 4, and by a variable flow-rate pump 14 if the heat-carrying fluid 10 is a liquid, or a variable flow-rate ventilator 15 if the heat-carrying fluid 10 is a gas. The type of connections between all the delivery and return pipes 9 to the pump 14 or ventilator 15 can be indifferently in series, in parallel or in mixed groups. In order to vary the flow rate alternately to the pump 14 or to the ventilator 15, a mixer or divertor valve can be used. By varying the flow rate of the heat-carrying fluid 10 it is possible to set the thermo-physical state of the transfer material 7 and helper material 11.

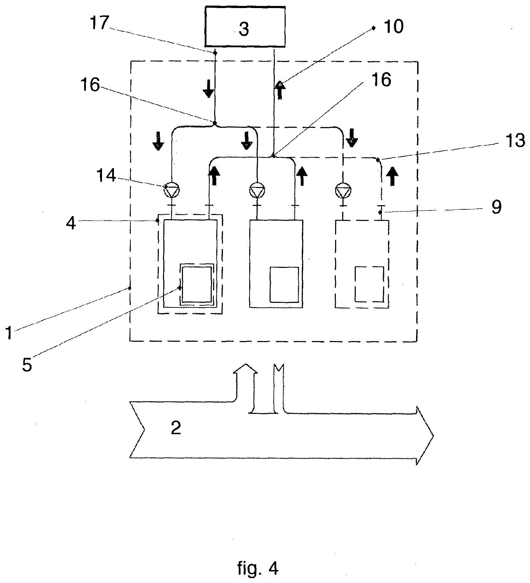

Fig. 4 shows the diagram of the feed circuit of the apparatus 1, consisting of two or more sections 4 described in fig. 3. The apparatus 1 is characterized by a parallel connection 16 of the delivery 13 and return 9 pipes arriving from the individual sections 4 and from the delivery and return pipe 17 with the external user device 3. The method may provide an independent management of each section 4, which can for example be differentiated or common for some or all the sections 4, in relation to the loading or unloading phases, extracting energy flows by acting on the flow rates pertaining to the pumps 14 or the ventilators 15. The energy flows extracted by each section 4 are conveyed in parallel 16 from the feed circuit 17 and join together to feed the external user device 3. The apparatus 1 is able to manage complementarily the energy flows extracted by each section 4, determining different thermo-physical states in the transfer materials 7 and possibly the helper material 11. Given the same characteristics of the hot off-gases 2 and the same constructional configuration of the apparatus 1, the greater the difference in temperature between the mean temperature of the off-gases 2 and the melting temperature of the transfer material 7, the greater is the extractive function and the smaller the moderating function; vice versa, the more the melting temperature approaches the mean temperature of the off-gases 2, the smaller the extractive function will be, and the greater the moderating function.

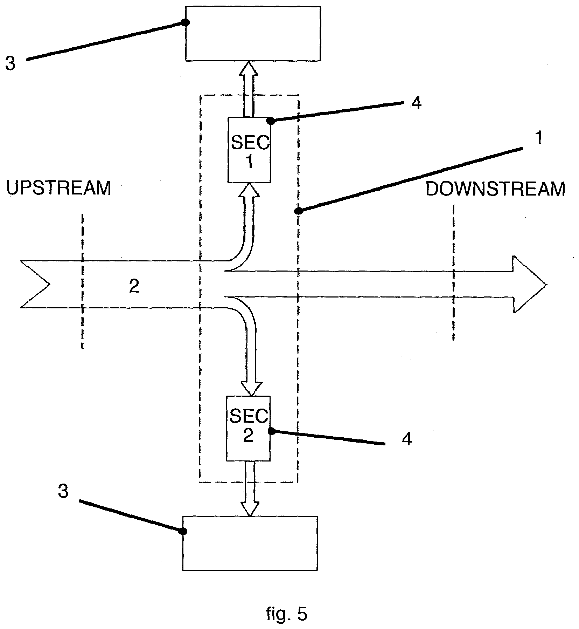

Fig. 5 schematically shows, by way of example, the apparatus 1 consisting of 2 sections 4 located in parallel with respect to the off-gases 2, where the heat exchange conditions with the off-gases 2 are the same.

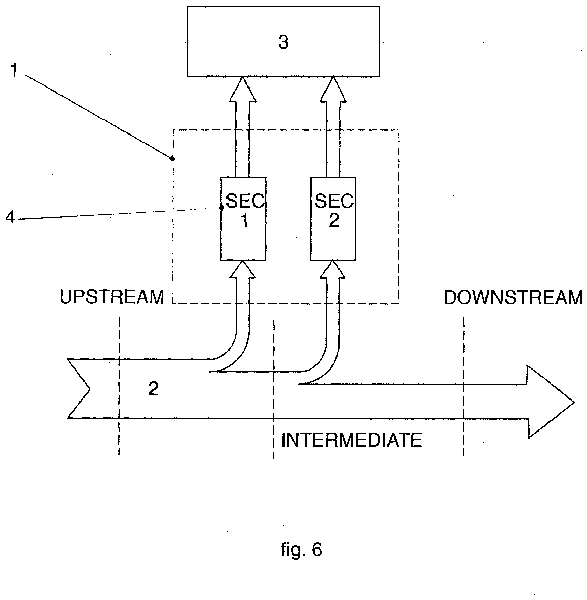

Fig. 6 schematically shows, by way of example, the apparatus 1 consisting of 2 sections 4 located in series, where the thermodynamic conditions of the off-gases 2 are different and hence with different heat exchange conditions. As a further variant, the transfer materials 7 can be different; in particular, with relation to the mean temperature of the off-gases 2 exiting from the first section, a transfer material 7 is adopted with a lower transition temperature so as to recover other portions of heat energy.

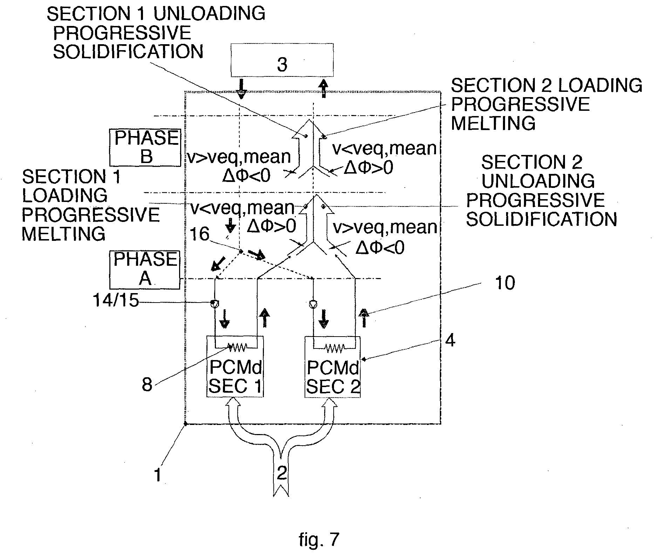

Fig. 7 schematically shows, by way of example, the functioning method of the apparatus 1 with two sections 4 (sec1 and sec2). Sections 1 and 2 are located, for simplicity of description, in parallel with respect to the off-gases 2 where two phases, called phase a and phase b, follow each other temporally in series. In phase a, in section 1, by reducing or zeroing the flow rate of the heat-carrying fluid 10, an extraction of energy flow is determined, smaller than the flow introduced by the off-gases 2, or zero, so as to determine a positive heat balance (ΔΦ > 0) in the transfer material 7 with the progressive melting of the transfer material 7. This phase is called "loading"phase; at the same time, section 2 is forced to an opposite functioning; extracting from the transfer material 7 a heat flow greater than the heat flow given up by the off-gases 2, the progressive solidification (ΔΦ < 0) is determined, called "unloading" phase. The heat-carrying fluids 10 of the two feed circuits 13 of the two sections 4 are put in parallel 16 to feed the external user device 3. In phase b, the values of the heat flows pertaining to the two sections 4 are inverted by acting on the pumps 14 (or ventilators 15), determining an opposite and complementary behavior. In this way it is possible to alternate, over time, the melting and solidification of the transfer material 7, keeping its temperature constant (complete or partial transition cycle) or in a defined range (overtransition cycle). The characteristic of complementarity is very useful in designing and regulating heat exchangers for the purposes of obtaining an overall constant flow of thermal power, or in any case managed.

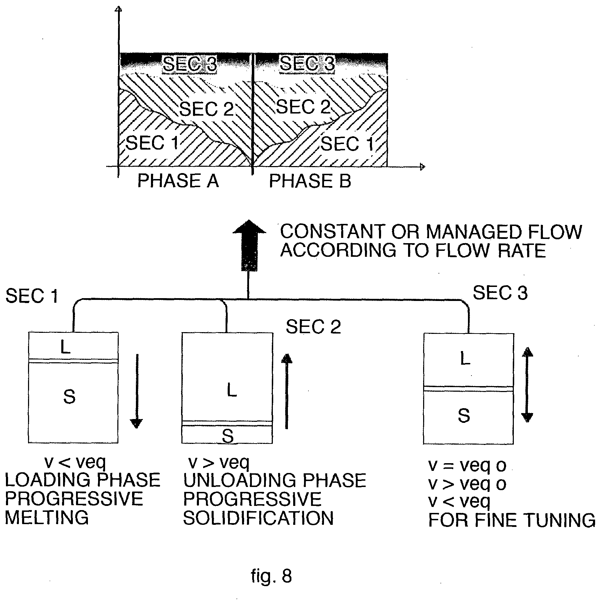

Fig. 8 shows an apparatus 1 consisting of 3 sections 4, where 2 sections are in functional phase opposition as shown and described in fig. 7; the third section (sec3) constitutes a heat energy reserve which allows to modulate the extraction of an additional flow of heat energy, optimum for the user device. Two sections 4 (sec1 and sec2) function in phase opposition with loading-unloading cycles where the melting or solidification fronts are coherent, while in the third section (sec3) the melting-solidification front varies in the two directions as a function of the power it extracts (fine tuning).

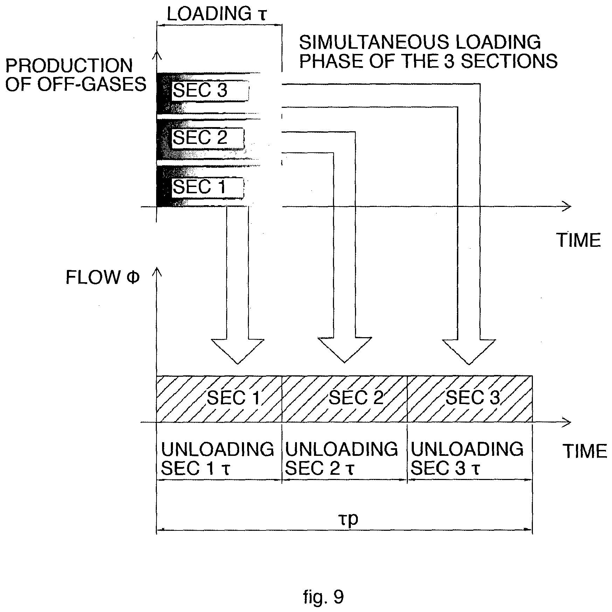

Fig. 9, by way of example and pertaining to an apparatus 1 consisting for example of 3 identical sections 4 located in parallel with respect to an off-gas 2 with intermittent heat flows, shows the management of the energy flows of said apparatus. For example, in the production of steel with LD (Linz-Donawitz) convertors, we have a periodic and intermittent process where the production phase of hot off-gases 2 is limited to about 20 minutes, while the phase where the off-gases 2 are absent is about 40 minutes. In section 1 we can hypothesize a state of balance between loading phase and unloading phase. The other two sections when there are off-gases 2 present are loaded and then are unloaded in succession in the remaining 40 minutes where section 1 does not operate. In this way, the unloading of the three sections is distributed in the whole hour so as to determine a constant overall heat flow extracted, to be sent to the external user device 3. In the case of liquid transfer material 7, it is advantageous to maintain a minimum value of the flow of fluid 10, to prevent technological problems.

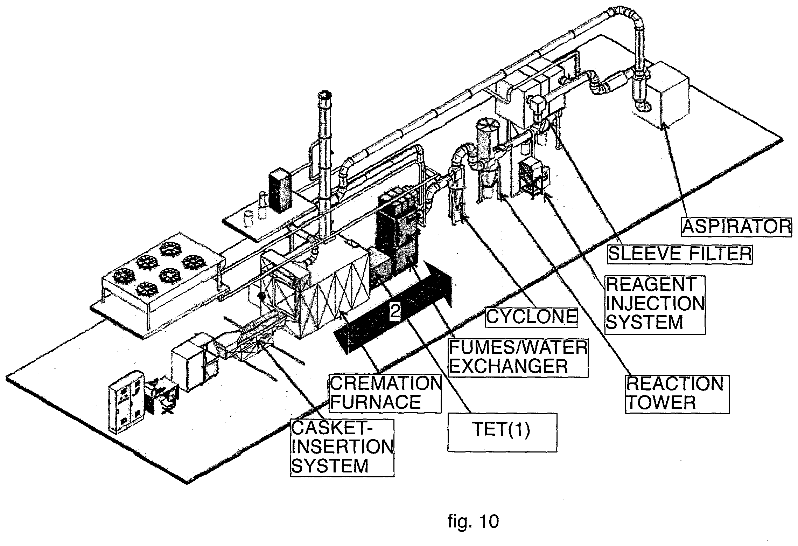

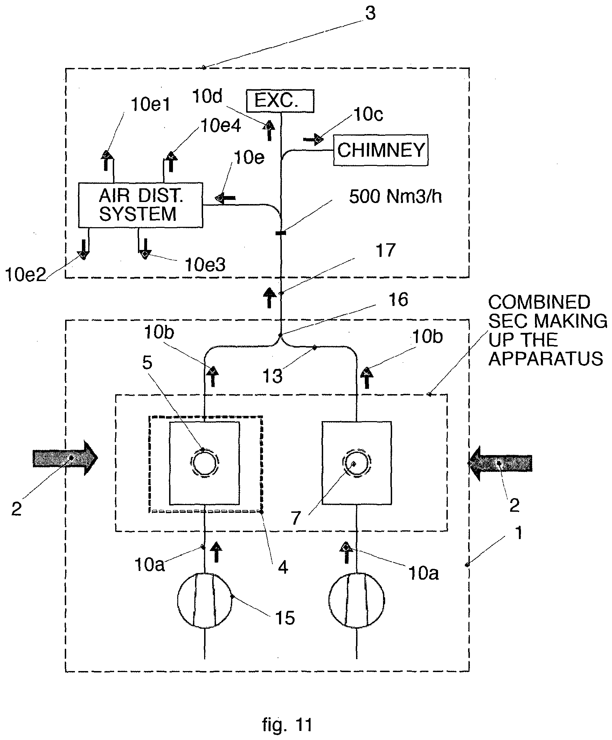

Fig. 10 shows a cremation plant where a cyclical and intermittent process occurs; it has a duration of 60-120 minutes, while the intermittence is daily and weekly. The cremation plant is a process with exothermic phases and phases where it is necessary to integrate a thermal power of about 40 Nmc of methane/cremation; the thermal power to the fire is about 1MW. Fig. 11 shows the insertion of the new apparatus 1 downstream of the post-combustion chamber and upstream of the heat dissipator in the direction of the off-gases 2.

Fig. 11 shows a block diagram of the cremation plant equipped with the new apparatus 1 for pre-heating the comburent air to high temperature

Note how in this case the circuit is open and therefore there are no return pipes or channels. The apparatus 1 is used to preheat the air, which is the heat-carrying fluid 10, from 20°C (10a) to about 400°C (10b).

The apparatus 1 with its sections 4 and the corresponding heat exchange modules 5 adopts aluminum as the phase change material 7, with its known thermo-physical characteristics. The apparatus 1 transfers heat flows from the off-gases 2, which have a temperature of not less than 850°C (about 900°C) and a flow rate of about 1000 Nmc/h, to a flow of air as heat-carrying fluid 10 that is introduced into the apparatus with the ventilators 15 at a temperature of 20°C (10a), the comburent air for an overall flow rate of about 500 Nmc/h is heated to a temperature of about 400°C (10b) with three possible uses: introduction into the chimney 10c, to superheat the fumes emitted and eliminate the "plume" of steam and at the same time to reduce the thermal power to be dissipated in the subsequent exchanger; recovery for internal use (10d) (for example heating the adjacent rooms); re- introduction into the process (10e) in different sections of the plant other than the extraction one, to replace primary and secondary air at temperature. The air at 400°C is introduced under the wooden casket 10ₑ₁ (self-ignition temperature less than 300°C) in order to accelerate combustion at the bottom so as to reduce the time of the cremation cycle. Alternatively the preheated air can be introduced into the combustion chamber and post-combustion chamber (10ₑ₂,10ₑ₃ and 10ₑ₄) in order to reduce the consumption of methane in the burners in the non-exothermic phases of the process by about 20%, in particular in the pre-heating steps in correspondence with the daily and weekly start-up and in the calcination of the bones.

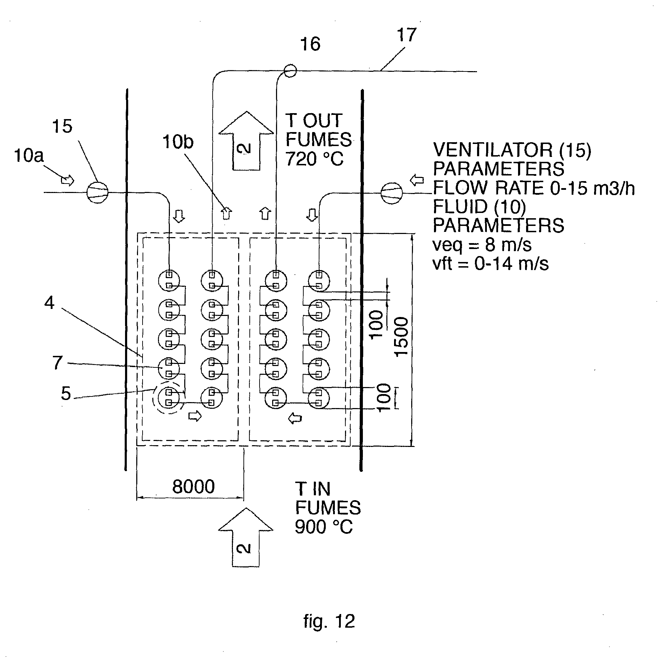

Fig. 12 shows the plan configuration of the apparatus 1 consisting of two sections 4a and 4b immersed in the off-gases 2; each section 4 consists of 8 heat exchange modules 5. The two variable flow rate ventilators 15 are shown, which pertain to the two sections 4, the delivery and return channels 13, the ambient air as heat-carrying fluid at inlet 10a at 20°C and at exit 10b at 400°C by means of the feed channels 13; the air arriving from the two sections is connected in parallel 16 to be conveyed by a channel 17 to the external user devices 3. The heat-carrying fluid consists of air 10 with an overall flow rate of about 500 Nmc/h. The speed of the air, which does not modify the thermo-physical state of the individual sections, is about 8 m/s (balance speed).

As already described, there are two phases (phase a and phase b). In phase a the speed of the air introduced into the first section 4 has a value of more than 14 m/s and determines the progressive solidification (unloading phase) of the transfer material 7 (aluminum); in the second section 4, the speed set is less than 4 m/s and determines the progressive melting of the transfer material 7 (loading phase). By alternating the values of the speed in the two sections 4 it is possible to maintain the thermodynamic conditions of the overall heat-carrying fluid 10 at almost constant values (400°C, 500 Nmc/h), also keeping a reserve of heat energy at a constant temperature (aluminum in the transition phase). The aluminum is taken to a maximum temperature of 700°C, about 70°C more than the melting temperature and as minimum temperature up to 500°C, that is, 130°C lower than the solidification temperature The off-gases 2 entering the apparatus have a temperature of 900°C (2a), and exiting from the apparatus a temperature of 720°C (2b). The thermal power removed from the off-gases 2 and given up to the comburent air 10 is 73kW thermal. The mass of aluminum used in the apparatus 1 is about 224 kg for a volume of 0.083 m³ which is divided between the two sections 4 and all 16 heat exchange modules 5. Each section 4 is characterized by a "loading" and "unloading" phase of 30 minutes with a heat energy exchanged of 131,860 KJ (it varies with the speeds of the heat-carrying fluid 10). The overall surface of the external shell is 6.70 m².

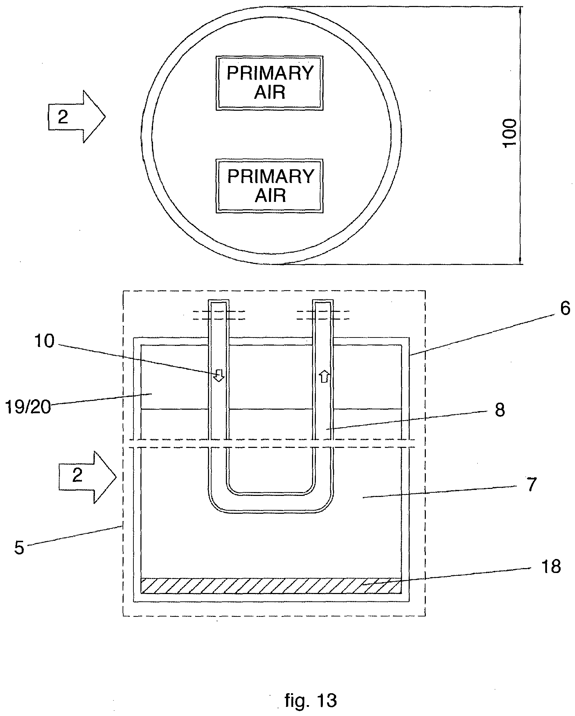

Fig. 13 shows a constructional configuration, indicative of and exemplifying each heat exchange module 5 immersed in the off-gases 2, consisting of a metal cylinder with an external diameter of 100 mm, with a commercial thickness, for example 6 mm, which constitutes the container/exchanger 6; the usable exchange height in the case of aluminum as transfer material 7 is 1 m, the surface of the container/exchanger 6 of the external shell is 0.314 m². Immersed in the aluminum, inside the container/exchanger 6, two channels are inserted, in this case rectangular, which define the extraction exchanger 8, with a thickness of 2 mm, for example.

According to a preferred variant form, the extraction exchanger 8 can be defined for example by four channels with a circular section and a diameter of about 30 mm.

The channels are extended outside the heat exchange module 5 and constitute the delivery and return pipes 9. Inside the channels the air 10 is conveyed at a variable speed, from 0 to 14 m/s. The base of the pipe is insulated by an insulating disc of a known type 18, to prevent incipient localized melting due to "thermal bridges". A free volume 19 is left in the upper part of the cylinder, to allow the dilation of the aluminum, and a "clearance" of additional volume for safety; the upper part is put in a vacuum or alternatively filled with an inert gas 20, for example CO2, at an initial pressure slightly higher than atmospheric pressure.

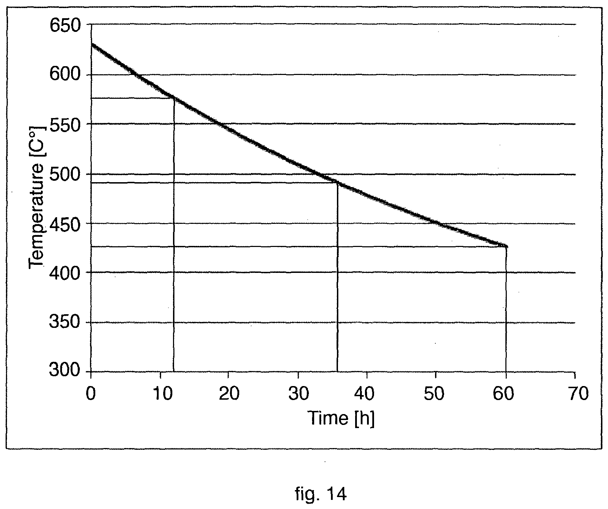

Fig. 14 shows a graph illustrating the decline of the temperature value of aluminum in the absence of hot off-gases. This decline is also known as "Newton's cooling". A crematorium furnace generally functions intermittently, operating 8-12 hours a day, stopping at the weekend (Saturday and Sunday), or only on Sunday (6-day week). The nightly stoppage is 12 hours, the Sunday stoppage is 36 hours, and the longest stoppage - Saturday and Sunday - is 60 hours. As initial temperature, we have considered the most unfavorable case with the aluminum in its solid state at a temperature of 630°C. After 12 hours, the temperature of the aluminum is more than 550°C; after 36 hours the temperature reaches 490°C, and after 60 hours the temperature is still above 400°C (much higher than the self-ignition temperature of wood). In all three cases, it is possible to use the apparatus 1 to preheat the comburent air 10b to accelerate start-up and to reduce consumption of methane. A functional variant provides that at the end of the operating period the aluminum is in the molten state with a cooling process that is much less incisive than the one shown in fig. 14.

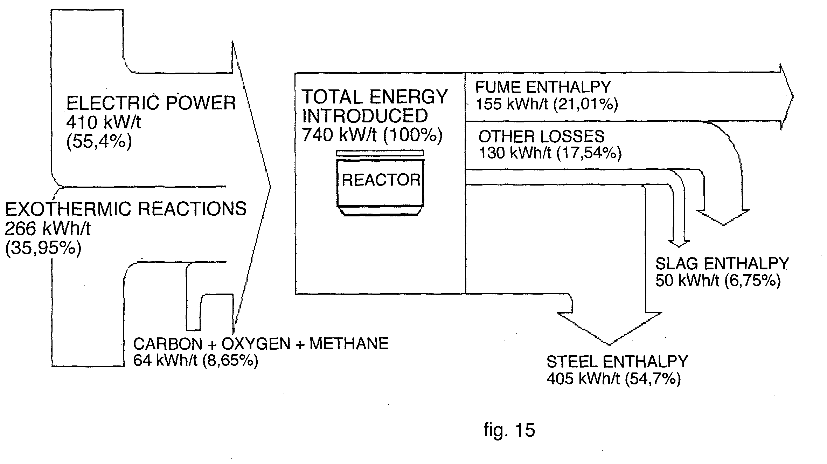

Fig. 15 schematically shows the energy balance of the process of producing steel with a typical electric arc furnace 21, where a potential heat recovery of more than 15% is shown.

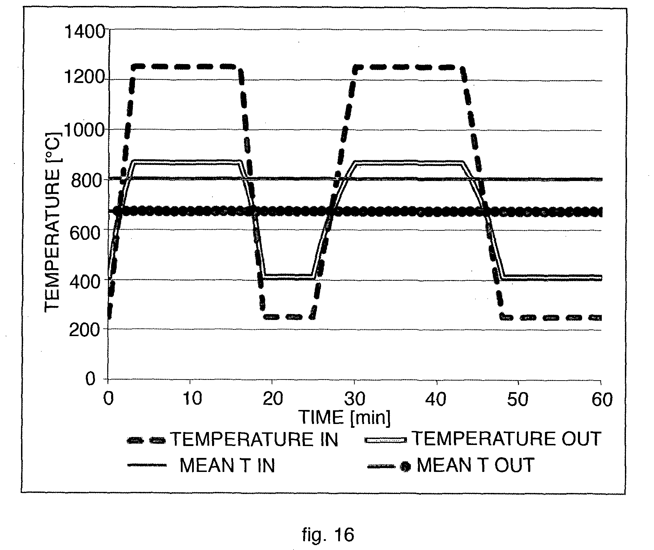

Fig. 16 shows graphically the temperature characteristics of the hot off-gases 2 in correspondence with the entrance to the settling chamber 22 of an electric arc furnace 21, having a medium-high production potential. The development is in schematized form, the mean temperature is about 800°C with peaks of more than 1200°C; upstream of the apparatus the variance in temperature is 209,338, while the standard deviation is 457.5; downstream of the apparatus the variance is 43,319 with a standard deviation of 208. The maximum temperature is 867°C and the minimum temperature is 412°C. This moderation allows an easier heat recovery downstream of the apparatus.

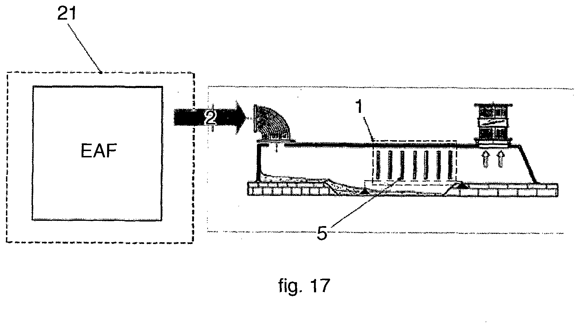

Fig. 17 schematically shows the insertion of the apparatus in the settling chamber 22.

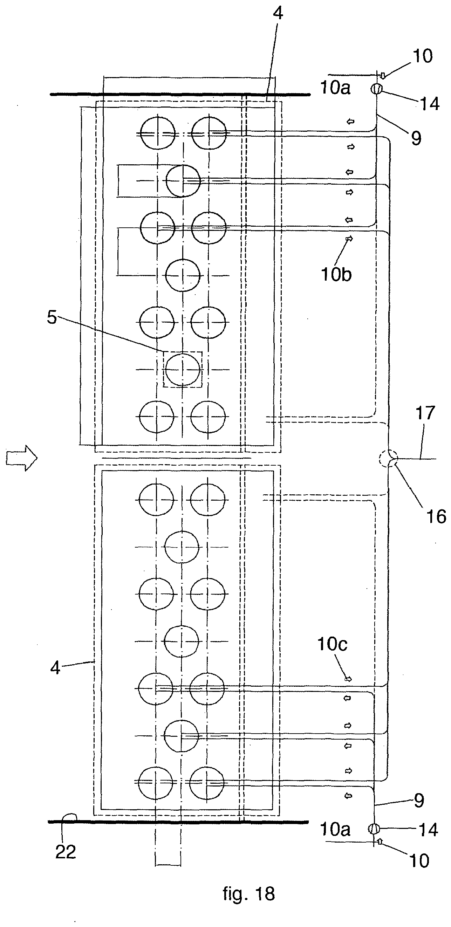

Fig. 18 schematically shows a plan view of the disposition of the heat exchange modules 5 inside the settling chamber 22; the section where the off-gases 2 pass is 5 m x 5 m. The modules are distanced by 0.1 m and have a diameter of 10". If CO2 is used as the heat-carrying fluid 10, the number of heat exchange modules 5 for each section 4 is 100, for a total of 200 heat exchange modules 5. If molten salts (NaNO3-KNO3 or Kcl-MgCl2 and others) are used as the heat-carrying fluid 10, the number of heat exchange modules 5 for each section 4 is 70, for a total of 140 heat exchange modules 5.

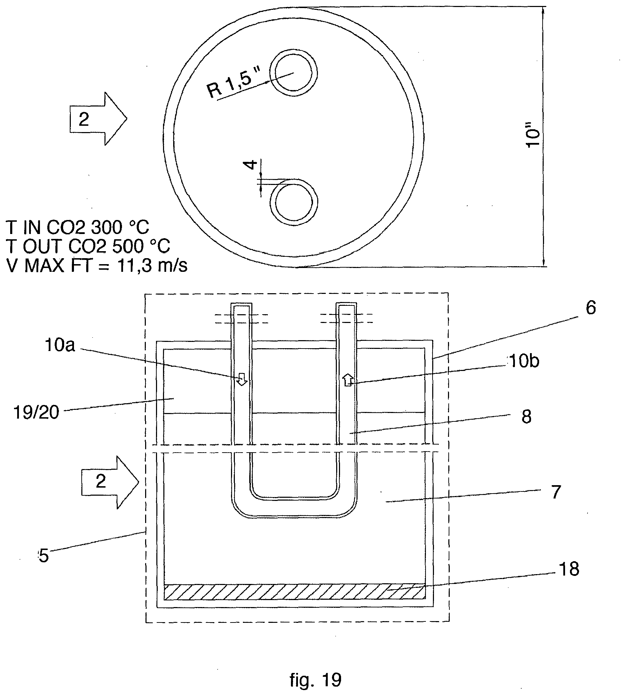

Fig. 19 shows, indicatively and schematically, possible examples of constructional characteristics of a heat exchange module 5 with CO₂ as the heat-carrying fluid 10, at a pressure of 5 bar; the pipes of the extraction exchanger 8 have a diameter of 3" and a thickness of 4 mm. The maximum speed of the CO₂ is 11.3 m/s, the inlet temperature 10a is 300°C and the exit temperature 10b is 500°C. With this solution the load losses of the section circuit are relatively high.

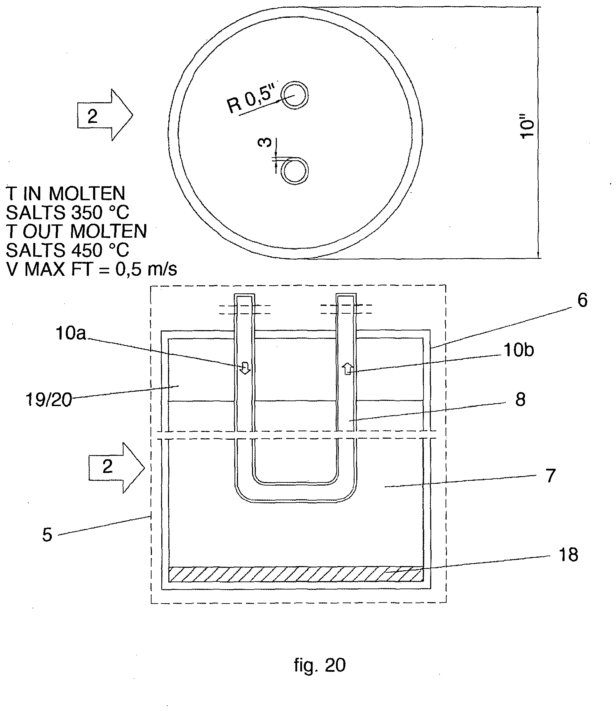

Fig. 20 shows, indicatively and schematically, possible examples of constructional characteristics of a heat exchange module 5 that uses molten industrial salts as the heat-carrying fluid 10; the pipes of the extraction exchanger 8 have a diameter of 1" and a thickness of 3 mm. The maximum speed of the molten salts is 0.5 m/s, the inlet temperature 10a is 350°C and the exit temperature 10b is 450°C.

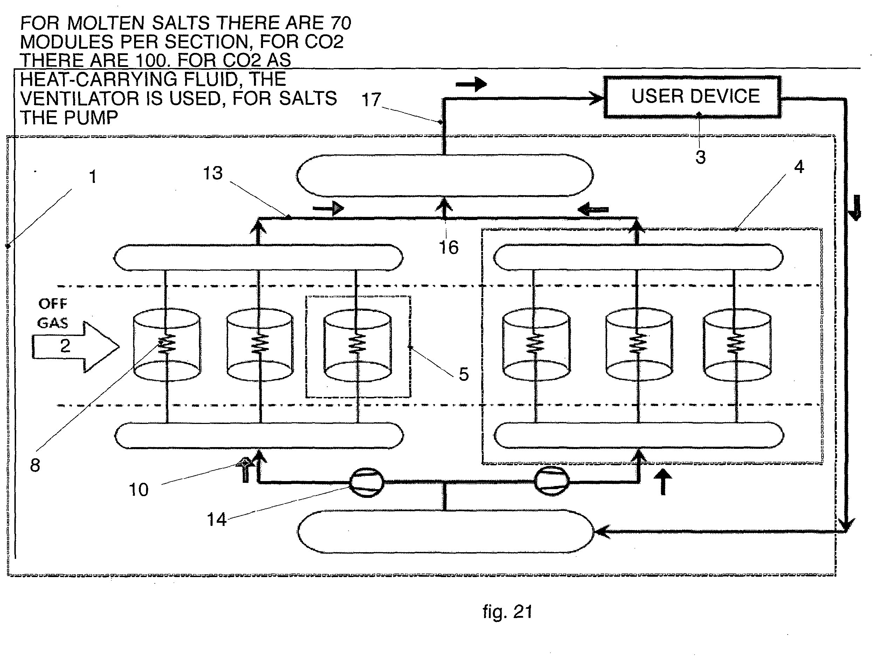

Fig. 21 shows the diagram of the parallel connection of each individual heat exchange module 5 for both the solutions: CO₂ and molten industrial salts.

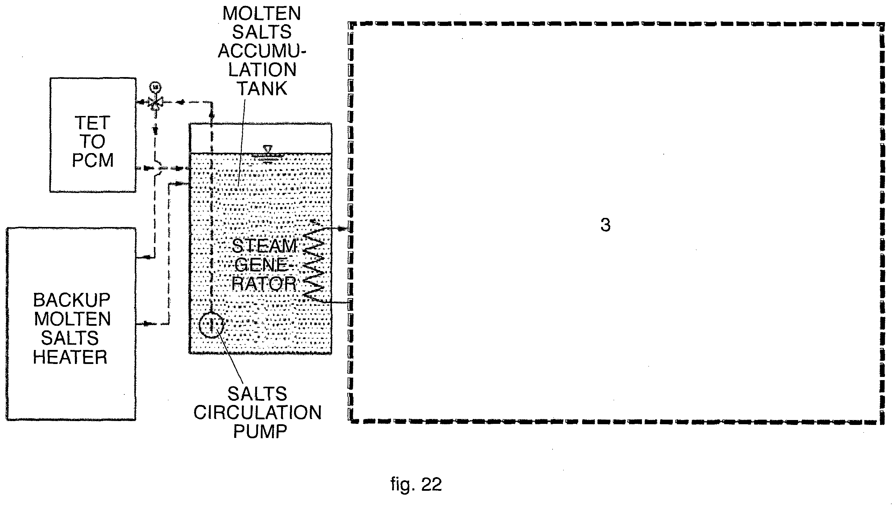

Fig. 22 shows the use of the apparatus 1 in combination with the accumulation tank having molten salts with an auxiliary heater. This configuration is very similar to the one used in thermodynamic solar power.

## Claims

1. Method for the extraction of heat energy from off-gases (2), with a temperature equal to or higher than 100°C, from productive or service processes and for the transfer of said energy to an external user device (3), using an apparatus (1) positioned at least partly inside a containing chamber (22) or one or more pipes of a plant performing said productive or service processes and in contact with said off-gases (2), said apparatus comprising at least two sections (4), each of which is defined by at least a heat exchange module (5) having:
- a container/exchanger (6), hollow in shape, made of metal material having a heat conductivity equal to or greater than 10 W/mK, located at least partly in contact with said off-gases (2), in order to exchange heat energy with them;
- a first phase change material (7), having a heat diffusivity equal to or greater than 10⁻⁷ m²/s, located inside said container/exchanger (6);
- an extraction exchanger (8), disposed in contact with said first phase change material (7) and having delivery and return pipes (9);
- a heat-carrying fluid (10) associated to said extraction exchanger (8) and circulating in said delivery and return pipes (9) to extract and transfer the heat energy accumulated by the first phase change material (7);
- movement means (14, 15) associated to said delivery and return pipes (9) in order to move the heat-carrying fluid (10) which flows through them and to convey and manage the flow rate of said heat-carrying fluid (10) to selectively determine, for each section (4), a variation in the values of the heat flow extracted from said off-gases (2) and to achieve a condition of constant phase transition of said first phase change material (7) of each section (4), wherein said method comprises:
- thermally forcing each of said at least two sections (4) by managing the flow of a heat-carrying fluid (10) circulating in delivery and return pipes (9) of each of said at least two sections (4), in order to selectively determine a thermal flow extracted from a first phase change material (7) above or below the thermal flow yielded by said off-gases (2), so as to respectively determine thermo-physical states of at least partial melting or solidification, and vice versa, in the first phase change material (7) of each of said sections (4), said thermo-physical states being alternated in each section (4) and complementary between the sections (4), whereby
- a relatively high flow rate of said heat-carrying fluid (10) determines an overall and progressive cooling of the first phase change material (7) of the section (4) in which said heat-carrying fluid (10) circulates, in order to take said first phase change material (7) to progressive solidification, if initially molten, and
- a relatively low or non-existent flow rate of said heat-carrying fluid (10) determines an overall and progressive heating of the first phase change material (7) of the section (4) in which said heat-carrying fluid (10) circulates, in order to take said first phase change material (7) to melt, if initially in the solid state;
- alternating solidification phases with melting phases of the first phase change material (7) of each section (4), to determine a continuous state of phase transition of said first phase change material (7) and to transfer a substantially constant, or in any case manageable, overall power to a user device (3) downstream of said apparatus (1).

2. Method as in claim 1, **characterized in that** it provides to increase the heat energy of the first phase change material (7) of at least most of said sections (4) during phases of said productive or service processes in which the off-gases (2) are provided with high temperature and high thermal power, and to extract heat energy from the first phase change material (7) of at least most of the sections (4) during phases of said productive or service processes subsequent to said phases in which said off-gases (2) are provided with high temperature and high thermal power.

3. Method as in claim 1 or 2, **characterized in that** it provides to effect a connection in parallel (16) of connection networks (13) of delivery and return pipes (9) of said sections (4), in order to obtain the overall power extracted as a sum of the thermal powers extracted by the individual sections (4), **and in that** it provides to extract an overall thermal power almost constant over time, or at least manageable, setting alternate solidification and melting cycles inside the individual sections (4), forcing them to a reciprocally complementary functioning.

4. Method as in claim 1, 2 or 3, wherein each section (4) comprises at least one heat exchange module (5), **characterized in that,** for every heat exchange module (5) of each section (4), it provides to take the first phase change material (7), in the solidification phase, to a temperature lower than the solidification temperature of a second phase change material (11) positioned inside said first phase change material (7), and in the melting phase, to a temperature higher than the melting temperature of said second phase change material (11).

5. Method as in one or other of the claims from 1 to 4, **characterized in that** it provides both to force the individual sections (4) of the apparatus (1), to determine in the first phase change material (7) temperatures that are lower than the melting temperatures of said second phase change material (11), in order to obtain the phase transition thereof, and to use the corresponding latent heat for subsequent heat exchanges.

## Patentansprüche

1. Verfahren zur Extraktion von Wärmeenergie aus Abgasen (2) mit einer Temperatur, die größer oder gleich 100 °C ist, aus Produktions- oder Serviceprozessen und zur Übertragung der Energie auf eine externe Nutzereinrichtung (3), unter Verwendung einer Vorrichtung (1), die zumindest teilweise innerhalb einer Aufnahmekammer (22) oder einem oder mehreren Rohren einer Anlage positioniert ist, die Produktions- oder Serviceprozesse durchführt, und in Kontakt mit den Abgasen (2) steht, wobei Die Vorrichtung mindestens zwei Abschnitte (4) aufweist, von denen jeder durch mindestens ein Wärmetauschermodul (5) definiert ist, das Folgendes aufweist:
- einen Behälter/Austauscher (6) von hohler Form, der aus einem metallischen Material hergestellt ist, das eine Wärmeleitfähigkeit größer oder gleich 10 W/mK aufweist, der derart angeordnet ist, dass dieser zumindest teilweise in Kontakt mit den Abgasen (2) steht, um Wärmeenergie mit ihnen auszutauschen;
- ein erstes Phasenänderungsmaterial (7), das eine Diffusionsfähigkeit größer oder gleich 10⁻⁷ m²/s aufweist und im Innern des Behälters/Austauschers (6) angeordnet ist;
- einen Extraktionsaustauscher (8), der in Kontakt mit dem ersten Phasenänderungsmaterial (7) angeordnet ist und Vorlauf- und Rücklaufleitungen (9) aufweist;
- ein Wärmeträgerfluid (10), das mit dem Extraktionsaustauscher (8) verbunden ist und in den Vorlauf- und Rücklaufleitungen (9) zirkuliert, um die Wärmeenergie, die vom ersten Phasenänderungsmaterial (7) akkumuliert wurde, zu extrahieren und zu übertragen;
- Bewegungsmittel (14, 15), die mit den Vorlauf- und Rücklaufleitungen (9) verbunden sind, um das Wärmeträgerfluid (10) zu bewegen, das durch diese strömt, und die Durchflussmenge des Wärmeträgerfluids (10) zu fördern und zu steuern, um selektiv für jeden Abschnitt (4) eine Variation in den Werten des Wärmestroms zu bestimmen, der aus den Abgasen (2) extrahiert wurde, und einen Zustand des konstanten Phasenübergangs des ersten Phasenänderungsmaterials (7) jedes Abschnitts (4) zu erreichen, wobei das Verfahren Folgendes aufweist:
- thermisches Antreiben jedes der mindestens zwei Abschnitte (4) durch Steuern des Stroms eines Wärmeträgerfluids (10), das in Vorlauf- und Rücklaufleitungen (9) jedes der mindestens zwei Abschnitte (4) zirkuliert, um selektiv einen Wärmestrom zu bestimmen, der aus einem ersten Phasenänderungsmaterial (7) oberhalb oder unterhalb des Wärmestroms extrahiert wird, der durch die Abgase (2) eingebracht wurde, um so jeweils die thermo-physikalischen Zustände von zumindest teilweisem Schmelzen oder Erstarren zu bestimmen und umgekehrt im ersten Phasenänderungsmaterial (7) jedes der Abschnitte (4) zu bestimmen, wobei die thermo-physikalischen Zustände sich in jedem Abschnitt (4) und komplementär zwischen den Abschnitten (4) abwechseln, wobei
- eine relativ hohe Durchflussmenge des Wärmeträgerfluids (10) eine gesamte und progressive Kühlung des ersten Phasenänderungsmaterials (7) des Abschnitts (4) bestimmt, in dem das Wärmeträgerfluid (10) zirkuliert, um das erste Phasenänderungsmaterial (7) zur progressiven Erstarrung zu bringen, wenn es ursprünglich geschmolzen ist, und
- eine relativ niedrige oder nicht vorhandene Durchflussmenge des Wärmeträgerfluids (10) bestimmt eine gesamte und progressive Erwärmung des ersten Phasenänderungsmaterials (7) des Abschnitts (4), in dem das Wärmeträgerfluid (10) zirkuliert, um das erste Phasenänderungsmaterial (7) zum Schmelzen zu bringen, wenn es ursprünglich im festen Zustand ist;
- Abwechseln von Erstarrungsphasen mit Schmelzphasen des ersten Phasenänderungsmaterials (7) jedes Abschnitts (4), um einen kontinuierlichen Zustand des Phasenübergangs des ersten Phasenänderungsmaterials (7) zu bestimmen und eine im Wesentlichen konstante, oder in jedem Fall steuerbare Gesamtleistung auf eine Nutzereinrichtung (3) stromabwärts von der Vorrichtung (1) zu übertragen.

2. Verfahren nach Anspruch 1, **dadurch gekennzeichnet, dass** dieses vorsieht, die Wärmeenergie des ersten Phasenänderungsmaterials (7) von mindestens den meisten Abschnitten (4) während der Phasen der Produktions- oder Serviceprozesse, in denen die Abgase (2) mit hoher Temperatur und hoher thermischer Leistung versehen sind, zu erhöhen und Wärmeenergie aus dem ersten Phasenänderungsmaterial (7) von mindestens den meisten Abschnitten (4) während der Phasen der Produktions- und Serviceprozesse, im Anschluss an den Phasen zu extrahieren, in denen die Abgase (2) mit hoher Temperatur und hoher thermischer Leistung versehen werden.

3. Verfahren nach Anspruch 1 oder 2, **dadurch gekennzeichnet, dass** dieses eine Parallelschaltung (16) von Verbindungsnetzen (13) von Vorlauf- und Rücklaufleitungen (9) der Abschnitte (4) vorsieht, um die Gesamtleistung zu erhalten, die als Summe der thermischen Leistungen extrahiert wird, die von den einzelnen Abschnitten (4) extrahiert werden, und dass dieses vorsieht, eine zeitlich nahezu konstante oder zumindest steuerbare thermische Gesamtleistung Energie zu extrahieren, indem dieses abwechselnd Erstarrungs- und Schmelzzyklen in den einzelnen Abschnitten (4) einstellt und diese zu einem reziproken komplementären Funktion zwingt.

4. Verfahren nach Anspruch 1, 2 oder 3, wobei jeder Abschnitt (4) mindestens ein Wärmetauschermodul (5) umfasst, **dadurch gekennzeichnet, dass** dieses für jedes Wärmetauschermodul (5) jedes Abschnitts (4) vorsieht, das erste Phasenänderungsmaterial (7) in der Erstarrungsphase auf eine Temperatur zu bringen, die niedriger als die Erstarrungstemperatur eines zweiten Phasenänderungsmaterials (11) ist, das innerhalb des ersten Phasenänderungsmaterials (7) positioniert ist, und in der Schmelzphase auf eine Temperatur zu bringen, die höher als die Schmelztemperatur des zweiten Phasenänderungsmaterials (11) ist.

5. Verfahren nach einem der Ansprüche 1 bis 4, **dadurch gekennzeichnet, dass** dieses vorsieht, einerseits die einzelnen Abschnitte (4) der Vorrichtung (1) dazu zu zwingen, im ersten Phasenänderungsmaterial (7) Temperaturen zu bestimmen, die niedriger als die Schmelztemperaturen des zweiten Phasenänderungsmaterials (11) sind, um den Phasenübergang desselben zu erhalten, und andererseits die entsprechende latente Wärme für anschließende Wärmeaustausche zu verwenden.

## Revendications

1. Procédé pour l'extraction d'énergie thermique à partir de gaz d'échappement chauds (2) à une température égale ou supérieure à 100°C, à partir de processus productifs ou de service et pour le transfert de ladite énergie vers un dispositif d'utilisateur externe (3), au moyen d'un appareil (1) positionné au moins partiellement à l'intérieur d'une chambre de contenant (22) ou d'un ou de plusieurs tuyaux d'une installation réalisant lesdits processus productifs ou de service et en contact avec lesdits gaz d'échappement (2), ledit appareil comprenant au moins deux sections (4), dont chacune est définie par au moins un module d'échange de chaleur (5) ayant :
- un récipient/échangeur (6), ayant une forme creuse, et constitué d'un matériau métallique avec une conductivité égale ou supérieure à 10 W/mK, disposé au moins partiellement en contact avec lesdits gaz d'échappement (2), afin d'échanger de l'énergie thermique avec ceux-ci ;
- un premier matériau à changement de phase (7) ayant une capacité de diffusion de chaleur étale ou supérieure à 10⁻⁷ m²/s, et disposé à l'intérieur du récipient/échangeur (6) ;
- un échangeur d'extraction (8), disposé en contact avec ledit premier matériau à changement de phase (7), et possédant des tuyaux de distribution et de retour (9) ;
- un fluide caloporteur (10) associé audit échangeur d'extraction (8) et circulant dans lesdits tuyaux de distribution et de retour
(9), de façon à extraire et à transférer l'énergie thermique accumulée
par le premier matériau à changement de phase (7) ;
- des moyens de mouvement (14, 15) associés auxdits tuyaux de distribution et de retour (9) afin de déplacer le fluide caloporteur (10) qui s'écoule à l'intérieur de ceux-ci, et à transporter et gérer le débit d'écoulement dudit fluide caloporteur (10) de façon à déterminer de façon sélective, pour chaque section (4), une variation dans les valeurs de l'écoulement de chaleur extrait à partir desdits gaz d'échappement (2) et à obtenir une condition de transition de phase constante dudit premier matériau à changement de phase (7) de chaque section (4), dans lequel le procédé comprend les étapes consistant à :
- forcer thermiquement chacune desdites au moins deux sections (4) en gérant le débit d'un fluide caloporteur (10) circulant dans les tuyaux de distribution et de retour (9) de chacune desdites au moins deux sections (4), afin de produire de façon sélective un flux thermique extrait à partir d'un premier matériau à changement de phase (7), au-dessus ou au-dessous du flux thermique donné par lesdits gaz d'échappement (2), de manière à déterminer respectivement les états thermo-physiques d'au moins une fusion ou une solidification partielle, et vice versa, dans le premier matériau à changement de phase (7) de chacune desdites sections (4), lesdits états thermo-physiques étant alternés dans chaque section (4) et complémentaires entre les sections (4), un débit relativement élevé dudit fluide caloporteur (10) déterminant un refroidissement total et progressif dudit premier matériau à changement de phase (7) de la section (4) dans lequel circule ledit fluide caloporteur (10), afin d'amener ledit premier matériau à changement de phase (7) jusqu'à une solidification progressive, s'il est initialement fondu, et un débit relativement bas ou non existant dudit fluide caloporteur (10) détermine un chauffage total et progressif du premier matériau à changement de phase (7) de la section (4) dans laquelle circule ledit fluide caloporteur (10), afin d'amener ledit premier matériau à changement de phase (7) à la fusion, s'il est initialement à l'état solide;
- alterner des phases de solidification avec des phases de fusion du premier matériau à changement de phase (7) de chaque section (4), afin de déterminer un état continu de transition de phase dudit premier matériau à changement de phase (7) et de transférer une puissance totale sensiblement constante, ou en tout cas gérable, à un dispositif d'utilisateur (3) en aval dudit appareil (1).

2. Procédé selon la revendication 1, **caractérisé en ce qu'**il comporte d'augmenter l'énergie thermique du premier matériau à changement de phase (7) d'au moins la plupart desdites sections (4) pendant des phases desdits processus productifs ou de service dans lequel les gaz d'échappement (2) sont fournis avec une température élevée et une haute puissance thermique, et d'extraire de l'énergie thermique à partir du premier matériau à changement de phase (7) d'au moins la plupart des sections (4) pendant les phases desdits processus productifs ou de service successives auxdites phases dans lesquelles lesdits gaz d'échappement (2) sont fournis avec une température élevée et une haute puissance thermique.

3. Procédé selon la revendication 1 ou 2, **caractérisé en ce qu'**il comporte d'effectuer une liaison en parallèle (16) de réseaux de liaison (13) de tuyaux de distribution et de retour (9) desdites sections (4), afin d'obtenir la puissance totale extraite comme une somme des puissances thermiques extraites par les sections individuelles (4), **et en ce qu'**il comporte d'extraire une puissance thermique globale presque constante dans le temps, ou au moins gérable, et de régler des cycles de solidification et e fusion alternés à l'intérieur des sections individuelles (4), les forçant à un fonctionnement complémentaire réciproque.

4. Procédé selon la revendication 1, 2 ou 3, dans lequel chaque section (4) comprend au moins un module échangeur de chaleur (5), **caractérisé en ce que,** pour chaque module échangeur de chaleur (5) de chaque section (4), le premier matériau à changement de phase (7) est prélevé, dans la phase de solidification, à une température inférieure à la température de solidification d'un deuxième matériau à changement de phase (11) placé à l'intérieur dudit premier matériau à changement de phase (7), et dans la phase de fusion, à une température supérieure à la température de fusion dudit deuxième matériau a changement de phase (11).

5. Procédé selon l'une ou l'autre des revendications 1 à 4, **caractérisé en ce qu'**il comporte à la fois de forcer les sections individuelles (4) de l'appareil (1), pour produire dans le premier matériau à changement de phase (7) des températures qui sont inférieures aux températures de fusion dudit deuxième matériau à changement de phase (11) afin d'obtenir la transition de phase de celui-ci, et d'utiliser la chaleur latente correspondante pour les échanges de chaleur successives.
